Europäisches Patentamt

European Patent Office

Office européen des brevets

(11) Publication number: 0 269 759
A1

# EUROPEAN PATENT APPLICATION

(21) Application number: 86116702.1

(22) Date of filing: 02.12.86

(51) Int. Cl.4 G01L 1/18

(43) Date of publication of application:
08.06.88 Bulletin 88/23

(84) Designated Contracting States:
DE FR GB

(71) Applicant: B.E.E. Co. Ltd.
801, Iijimacho Sakae-ku
Yokohama City Kanagawa Pref. 239(JP)

(72) Inventor: Aoyagi, Takanosuke
3-12-35, Hisagi Zushi City
Kanagawa Prefecture 249(JP)
Inventor: Dezaki, Tomoya
2-20, Mabori Kaigan Yokosuka City
Kanagawa Prefecture 239(JP)

(74) Representative: Goddar, Heinz J., Dr. et al
FORRESTER & BOEHMERT
Widenmayerstrasse 4/I
D-8000 München 22(DE)

(54) Semiconductor strain gauge.

(57) A semiconductor strain gauge pattern includes a semiconductor single crystal chip (4); one or a plurality of N type or P type strain gauge patterns (5) having the same geometrical shape and the same dimensions respectively prepared symmetrically on the face and back of said semiconductor single crystal chip (4) by making use of a vapor phase epitaxy method and another similar techniques; a bridge circuit adapted to permit each of said strain gauge patterns to be assembled thereinto.

FIG. I

EP 0 269 759 A1

## SEMICONDUCTOR STRAIN GAUGE

The present invention relates to a semiconductor strain gauge for measuring a strain of any object, and more particularly to a semiconductor strain gauge capable of constructing a bridge circuit having much higher stability than that of prior circuits.

A metal resistor when subjected to any stress and hence to any strain, changes electric resistance thereof following a relation: $\Delta R/R = K \bullet \epsilon$.

Here, $\epsilon$ denotes a strain, $\Delta R/R$ is a rate of a resistance change and $K$ is sensitivity, called a gauge rate. $K$ slightly depends on kinds of metal but may be 2.0 in general. A metal resistance strain gauge is constructed as follows: the metal resistor is formed into a small-gauge wire or a thin foil sheet, which is then attached to a thin insulating film (or a sheet of paper). This is fixed on a desired portion with the aid of bonding or another proper means to measure any strain produced at that portion as a change of electric resistance of the resistor. A strain gauge of this type is usually employed for desiring the change of the electric resistance as voltage after assembling it into a bridge circuit (Wheatstone bridge circuit).

On the contrary, a semiconductor such as silicon single crystal, etc., properly doped with some impurities includes a change of electric resistance owing to a mechanical strain (stress), called a piezo-electric effect. This phenomenon has different effects depending on the direction of its crystal axis and on the kinds of the semiconductor in use, and further depending on whether the semiconductor is an N or P type specified by the kind of a doped impurity. Thereupon, a strain gauge is yielded by cutting the semiconductor crystal properly doped with some impurities in a proper crystal axis direction which assures high sensitivity several tens of times larger than that of the metal resistance as the gauge rate owing to its piezo-electric effect. For example, a P type Si semiconductor cut in the (111) direction of the gauge rate while an N type one cut in the direction of (100) provides about -130. ( the minus sign designates the polarity of the electric resistance reduced when it is elongated.) Such a semiconductor strain gauge has already been put into practical use as exemplarily illustrated in Fig. 17. The strain gauge of Fig. 17 is constructed by connecting in an ohmic manner lead wires 31, 32 made of metal to a chip 30 prepared by cutting an N type Si crystal in the (100) direction (length: 5mm, width: 0.8mm, thickness: 0.1mm) with the aid of thermocompression bonding, etc.

Moreover, another type of strain gauge has also been developed and put into practical use wherein a plurality of portions, each operated as strain gauges by making use of a piezo-electric effect, one formed on one surface of a semiconductor single crystal chip as an exclusive sensor. Such a gauge is adapted to prepare a plurality of N or P type strain gauge patterns on the chip surface in the appropriate direction of the chip by means of deposition and the like for providing a sensor serving to detect a desired physical quantity by the combination of the strain gauge patterns prepared as such. Techniques to manufacture such sensors are common to those in transistors or ICs, and hence fine techniques are applicable thereto. Furthermore, transistors having functios such as amplification, etc., can also be manufactured on the same chip independently of the strain gauge patterns by making use of a piezo-electric effect or in common thereto, and have been put to practical use.

Those strain gauges constructed as sensors as described above can not be applied to subjects other than those as sensors. Against this, the semiconductor strain gauge illustrated in Fig. 17 is widely applicable to arbitrary physical phenomena (including strains) convertible to mechanical strain by mounting it on an arbitrary portion (with the aid of bonding) and has high sensitivity several tens times larger than that of a strain gauge with use of a metal resistor. However, it unfortunately has some drawbacks. Especially, it severely provides an erroneous output owing to ambient temperature therearound.

A semiconducter has in principle electric resistance thereof changing not only depending on mechanical strain (stress) but also on temperature, magnetic field, and electromagnetic waves (e.g., light waves), etc. Temperature thereamong is particularly severe factor. Namely, a temperature change during a strain measurement causes a change of resistance which overlaps on that produced with the strain in concern to result in an error fraction.

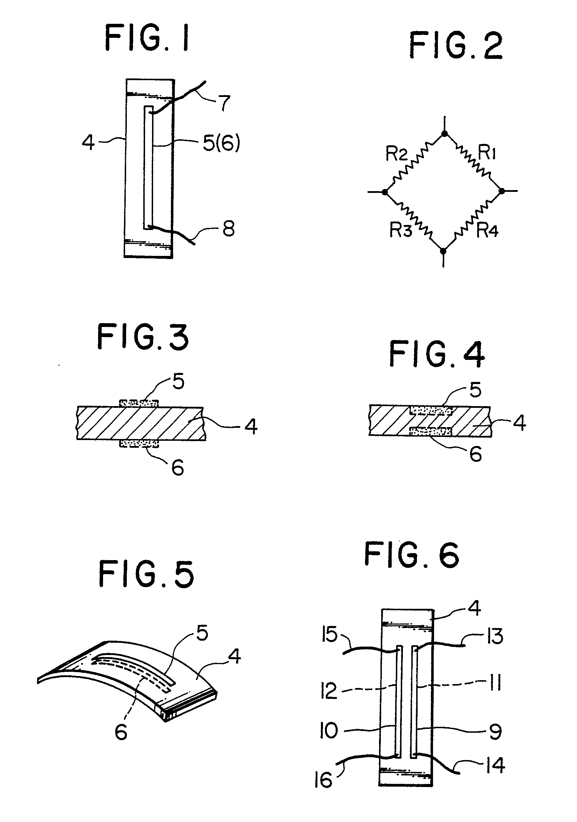

A resistance change in the metal resistance strain gauge is if any smaller than that in the semiconductor strain gauge. A strain gauge is usually employed after assembled into a bridge circuit, as illustrated in Fig. 2. R1 in the same figure designates a strain gauge, and R2, R3, and R4 are respectively fixed resistors, substantially satisfying a relation R1 = R2 = R3 = R4. Output voltage E0 from this bridge circuit as supplied with prescribed supply voltage Ei satisfies:

$$E0 = ( \Delta R2/R1 - \Delta R2/R2 + \Delta R3/R3 - \Delta R4/R4) \cdot Ei/4,$$

with the assumption of an initial value thereof being adjusted to zero before any strain is produced. $\Delta R1$, a fractional change of R1 comprises $\Delta R1s$ due to strain and $\Delta R1t$ due to temperature. Assuming here that R2, fixed resistance, changes owing to temperature with a fractional change of $\Delta R2t$ satisfying: $\Delta R2t/R2 = \Delta R1t/R1$, and that no change is found in R3 and R4, in output due to an ambient temperature change is yielded and a relation: $E0 = k \bullet \epsilon$ holds with the result that the output voltage in concern is proportional to only strain detected by R1 without an erroneous fraction due to temperature.

The R2 has no change due to strain but should undergo the same change as that of R1 with respect to temperature. Accordingly, a strain gauge of the same kind as that for use in R1 is employed in general, and mounted at a position where no strain is produced at the same temperature as that of R1. The R2 serves as a strain guage for temperature compensation.

Also in the semiconductor strain gauge, semiconductor strain gauges of the same kind are incorporated into a bridge circuit for temperature compensation, and employed as in the metal resistance strain gauge. The semiconductor strain gauge is however difficult to prevent an erroneous output from being produced owning to ambient temperature since it has a much higher temperature coefficient of its resistance and severe variations thereof as compared with those in the metal strain gauge.

In view of the drawbacks of the prior arts, it is an object of the present invention to provide an improved semiconductor strain gauge including strain gauge patterns prepared symmetrically on the face and back of a semiconductor single crystal chip by making use of a vapor phase epitaxy method and assembled into a bridge circuit as a strain gauge.

To achieve the above object, a semiconductor strain gauge consists of a semiconductor single crystal chip, a plurality of N or P type semiconductor strain gauge patterns prepared symmetrically on the face and back of the semiconductor single chip, each of said strain gauge patterns having the same geometrical shape and the same dimentions, and a bridge circuit for permitting these patterns so prepared on the face and back of the semiconductor single crystal chip to be assembled thereinto to respectively electrically independently serve as strain gauges.

The above and other objects, features and advantages of the present invention will become more apparent from the following description when taken in conjunction with the accompanying drawings in which preferred embodiments of the present invention is shown by way of illustrative example.

Fig. 1 is a plan view illustrating an embodiment of a semiconductor strain gauge according to the present invention;

Fig. 2 is a bridge cirucit for use in the present invention;

Fig. 3 is a cross sectional view illustrating a strain gauge pattern of the present invention prepared by making use of a vapor phase epitaxy method;

Fig. 4 is a cross sectional view illustrating a strain gauge pattern prepared by making use of a diffusion process;

Fig. 5 is a perspective view illustrating the semiconductor strain gauge of Fig. 1 being bended;

Fig. 6 is a view illustrative another embodiment of the semiconductor strain gauge according to the present invention;

Fig. 7 is a perspective view illustrating the strain gauge of Fig. 6 being twisted;

Fig. 8 is a view illustrating the strain gauge pattern of the present invention making a round trip;

Fig. 9 is a view illustrating a base material of the semiconductor strain gauge of the present invention where the width and thickness of an end part thereof are changed;

Figs. 10 and 11 are respectively views illustrating application examples of the semiconductor strain gauge of the present invention: one being an example thereof bonded to an object to be measured, and the other being a state thereof when subjected to any force;

Fig. 12 is a view illustrating a still another embodiment of the semiconductor strain gauge according to the present invention;

Fig. 13 is a connection diagram of Fig. 12;

Fig. 14 is a view illustrating a state of the strain gauge of Fig. 12 wherein it is adapted to have the upper and lower ends thereof being fixed and is subjected to very small displacement;

Fig. 15 is a view illustrating spatial strain distribution of Fig. 14;

Fig. 16 is a view exemplarily illustrating a strain gauge when avoiding any concentrated stress applied thereto as shown in Fig. 11; and

Fig. 17 is a view illustrating a prior semiconductor strain gauge.

A semiconductor strain gauge according to the present invention will be described with reference to the accompanying drawings.

An example of a semiconductor strain gauge according to the present invention is illustrated in Fig. 1. As shown in the same figure, disignated at 4 is a silicon (Si) single crystal chip cut in the direction [100] of the crystal axis thereof and has dimensions, for example, 10 mm in length, 2 mm in width, and 0.5 mm in thickness. Patterns are respectively formed on the face and back of the chip surface. Thereupon, when insulating properties of the chip are low, a thin oxide film is previously formed on the chip surface by making use of a deposition process, etc. Now then, the chip has on the face thereof, an N type Si pattern 5 prepared with the aid of a vapor phase epitaxy method or another techniques. Since the portion 5 has the same crystal axis as that of the chip, the longitudinal direction thereof is [100], and hence it assures a strain gauge having the maximum gauge rate as an N type semiconductor. The chip likewise has on the back thereof, quite the same pattern 6 as that described above. With these patterns prepared as such with the aid of a vapor phase epitaxy method, the cross sectional view thereof is as illustrated in Fig. 3. It is found from the comparison of this arrangement with the cross sectional view of Fig. 4 wherein a strain gauge is formed through diffusion that the former has more definite interval between the patterns 5 and 6 than the latter. Here, designated at 7 and 8 are respectively lead wires.

Hereupon, the above patterns 5 and 6 are respectively employed as R1 and R2 of the bridge circuit shown in Fig. 2, these resistances being fixed ones. Since these resistances R1 and R2 are quite the same in dimensions, structures, and chemical compositions,, temperature coefficients thereof are essentially equal to each other. In addition, since both are opposed across the thin chip and hence have no temperature difference therebetween, there is no erroneous output from the bridge circuit due to any change in peripheral temperature thereof. Namely, both patterns 5 and 6 mutually perfectly compensate themselves for temperature.

Here, when any linear strain such as tensile force (stretching) and compaction (constriction) is applied to the chip 4 lengthwise (vertically in Fig. 1), the same stretching or constriction is produced on the patterns 5 and 6. Thereupon, both the patterns 5 and 6 being strain gauges respectively have essntially the same gauge rate, and hence have the same change in resistances thereof. Thus, since the bridge circuit provides a difference between the change in resistances, no output is produced therefrom.

Provided here the chip is bent as shown in Fig. 6, the pattern 5 is stretched while the pattern 6 is constricted to result in resistance changes thereof. Since polarities of those strains are different from each other, the bridge circuit provides as an output therefrom, a difference between them, i.e., the sum of absolute values thereof. The magnitudes of the stretching of 5 and the constriction of 6 are proportional to the interval between the patterns 5 as well as curvatures thereof when those curvatures are relatively small. The interval between the patterns 5 and 6 in a chip thickness and is constant as described previously, and thus the output from the bridge circuit indicates the curvature of the bending produced on the chip.

As described above, the semiconductor strain gauge of Fig. 1 not only provides no output due to the stretching and constriction of the chip when assembled into the bridge circuit, but also faithfully detects the chip bending without producing the erroneous output due to ambient temperature. i.e. without causing the most severe shortcoming of a semiconductor strain gauge.

In succession, another embodiment of the semiconductor strain gauge of the present invention will be described with reference to Fig. 6.

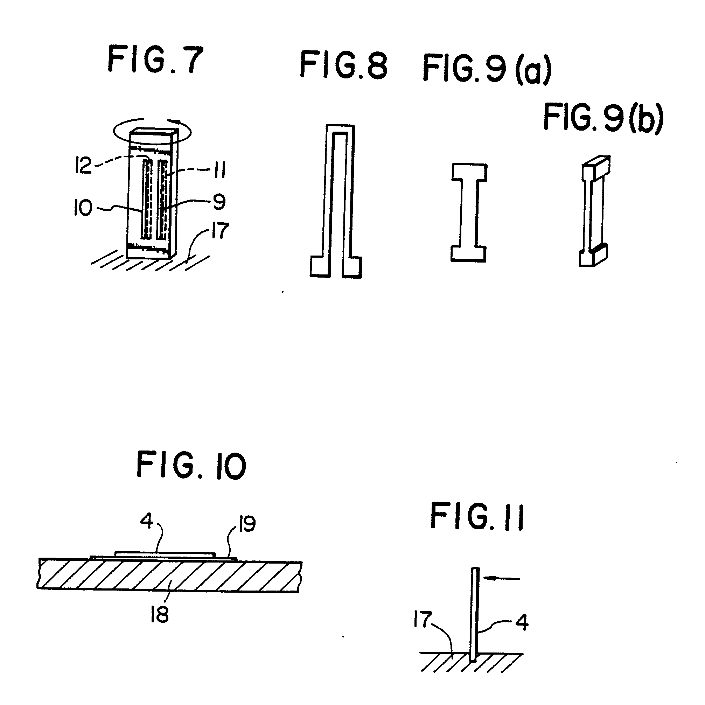

As illustrated in the same figure, four same shape N type patterns 9, 10, 11, and 12 are prepared on the chip as in Fig. 1: two on the face of the chip while the other two on the back thereof separately. Since the former two patterns 9 and 10 prepared on the face are symmetrically arranged with respect to the latter two patterns 11 and 12, and hence the patterns 11 and 12, and hence the pattern 11 is covered with the pattern 9 while the pattern 12 covered with the pattern 10 (so, they can not be seen in Fig. 7). The numerals 13, 14 respectively designate lead wires of 9 while the numerals 15, 16 respectively designate lead wires of 10 (lead wires 11, 12 are not shown). These four patterns 9, 10, 11, and 12 are respectively independent strain gauges of the same characteristics. These lead wires 9, 10, 11, and 12 are connected to the resistors R1, R2, R3, and R4 of the bridge circuit of Fig. 2 in this order. These four strain gauges have the same temperature characteristics for those resistors of the bridge circuit as in the previous description and furthermore have very small temperatrue differences thereamong, and thus the bridge circuit provides no erroneous output due to ambient temperature. Moreover, it has no output for the linear strain produced owing to the stretching and constriction of the chip. In addition, the two fixed resistors in the description of the bridge circuit of the strain guage of Fig. 1 becomes unnecessary, and since the four arms of the bridge circuit now in concern are connected to the strain gauges as described above, the output from the bridge circuit becomes twice that of Fig. 1 as the chip is subjected to any bending as illustrated in Fig. 5.

Now, the strain gauges 9, 10, 12 and 10 are assumed to be connected to R1, R2, R3, and R4 of the bridge circuit in this order. Thereupon, as described previously, no erroneous output due to ambient temperature as well as no linear strain due to the stretching and constriction of the chip are produced on the output of the bgridge circuit. In addition when any bending is applied to the chip as shown in Fig. 5, no output is derived from the bridge circuit because R3 and R4 described above have already been replaced with each other to cancel out respective fractional changes of the strains produced on the strain gauges. Namely, no output due to any bending is produced. In contrast therewith, provided one end of the chip is fixed to 17, and the other end is twisted as shown by the arrow in the same figure, 9 and 12 produce the strain of stretching while 10 and 11 produce the strain of constriction. As a result, the bridge circuit provides an output proportional to the twisting.

Although the semiconductor strain gauge pattern according to the present invention was described with use, for brevity, of a single straight line as shown in Fig. 1 or Fig. 6, but other various modifications may be possible for the strain gauge pattern instead of the straight line geometry. For example, the following strain gauge patterns may be devised: a stright line adapted to make a round trip as shown in Fig. 8 or a semiconductor type and other types of arbitrary shapes (not shown). Moreover, it is also possible to expand a pattern end for facilitating the mounting of lead wires, as shown in Fig. 8.

Furthermore, also for the geometrical shape of the chip, various modifications such as a chip shown in Fig. 9 (a) where both ends thereof are extended, or a chip shown in Fig. 9 (b) where thicknesses of both ends thereof are increased may be employed.

Application Example

In succession, examples of application of the semiconductor strain gauge according to the present invention will be described.

A semiconductor strain gauge 4 of the present invention is bonded like a usual strain gauge, onto an object surface 18 whose bending is desirous to be measured but allowing stretching and constriction to be ignored, like a usual strain gauge, as shown in Fig. 10. Thereupon, provided it is needed to avoid direct contact of the present semiconductor strain gauge pattern with the surface to be measured, a thin paper sheet 19 impregnated with a bonding agent may be interposed therebetween. With such arrangement, production of a bending component on the object surface can be measured independently of stretching or constriction thereof. In addition, no erroneous component due to ambient temperature is produced as described above. Such measurement is impossible in prior semiconductor strain gauges.

Subsequently, one end of the chip of the present semiconductor strain gauge 4 is fixed on 17, and the other end is pushed horizontally as shown by the arrow. Thereupon, the bridge circuit provides an output proportional to deformation in the arrow direction likewise the above bending. Hereby, a displayment gauge sensible in the arrow direction is assured. The chip is, since part of a single crystal, perfect elastic body, wherein displacement is proportional to applied force. Namely, this also serves as a dynamometer sensible in the arrow direction. The chip is small-sized, and hence measureable displacement or force thereby is also very small. As a matter of course, this output from the strain guage includes no erroneous fraction due to ambient temperature, stretching and constriction, and other components involved.

When one end of the chip is fixed and the other is twisted as shown in Fig. 7, any twisting can be measured as already described with use of the bridge connection also as already described, and hence this provides a gauge for fine torsional angles as well as a fine torsional force (torque) gauge. This also produces no erroneous component due to ambient temperature and no other components mixed therein.

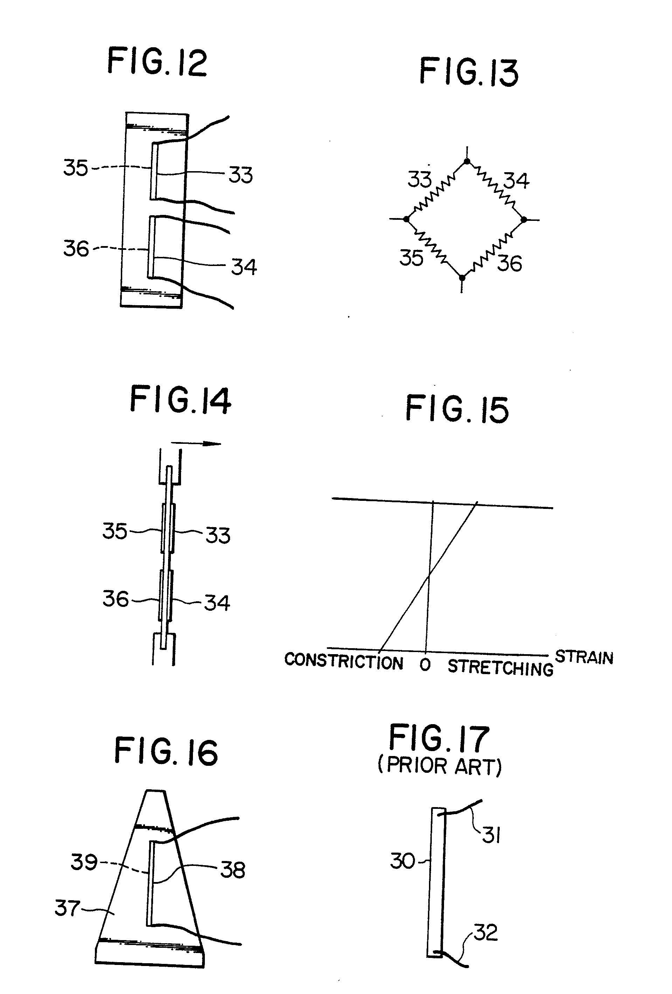

In a semiconductor strain gauge wherein four strain gauge patterns 33, 34, 35, and 36 are respectively formed on the chip: the former two on the face of the chip and the latter two on the back thereof, as shown in Fig. 12, a bridge circuit is connected to the strain gauge as shown in Fig. 13. Now, the upper and lower ends of the semicondeuctor strain gauge shown in Fig. 12 are fixed as shown in Fig. 14, and when fine displacement (or force) in parallel movements is applied to the fixed ends in the arrow direction of Fig. 14, strain distribution on the chip surface (on the right side in the figure) is provided as shown in Fig. 15. Namely, the patterns 33 and 34 are located on the same surface, but polarities of the strains distributed thereon are opposite to each other. Also for the patterns 35 and 36, the same is applied. Thus, the bridge circuit of Fig. 13 sensibly detects the fine displacement (or force) in parallel movement of the upper and lower ends of the gauge. In addition, it provides no output for the strains uniformly distributed or the face and back of the chip.

Moreover, when in a semiconductor strain guage having the chip arrangement as shown in Fig. 1, one end thereof is fixed and the other is subjected to fine displacement (or force), the chip is bended to produce a surface strain. Considering here, upon detecting the above surface strain, the situation as shown in Fig. 11, movement produced thereupon and distributed on the chip is proportional to a distance from a point of application of the force (a point shown by the arrow of Fig. 11) to permit the surface strain to become maximum in the vicinity of the fixed part of the chip while permitting the above strain to become minimum at the position of application of the force. Accordingly, to achieve the object as shown in Fig. 11, it is desirous to taper the chip shape as shown in Fig. 16 to continusouly for thereby uniformly distributing the surface strain. Hereby, any rupture due to concentrated stress can be avoided. The numeral 37 of Fig. 16 designates the chip, and patterns 38 and 39 are respectively strain guage parts prepared on the face and the back of the chip.

As described in detail, according to the semiconductor strain gauge of the present invention, various physical quantities other than measurement objects can be eliminated together with erroneous components due to ambient temperature. An interval between opposition constituent strain gauge patterns is fixed via the chip thickness to result in fixed output sensitivity of the strain gauge. In addition, the present semiconductor strain gauge can be employed for different purposes and at different positions from those in prior respective strain gauges. Furthermore, it can serve as a sensor for measuring objects of extremely small quantities. Thus, the semiconductor strain guage of the present invention is widely applicable to various fields and hence of considerable merit industrially.

Although certain preferred embodiments have been shown and described, it should be understood that many changes and modifications may be made therein without departing from the scope of the appended claims.

The features disclosed in the foregoing description, in the claims and/or in the accompanying drawings may, both separately and in any combination thereof, be material for realising the invention in diverse forms thereof.

## Claims

1. A semiconductor strain gauge comprising: a semiconductor single crystal chip (14); a plurality of N or P type semiconductor strain gauge patterns (5) prepared symmetrically on the face and back of said semiconductor single chip (4), each of said strain gauge patterns (5) having the same geometrical shape and the same dimensions; and a bridge circuit connected to said semiconductor strain gauge patterns (5) for permitting said patterns (5) so prepared on the face and back of the semiconductor single crystal chip (4) to be assembled thereinto to respectively electrically independently serve as strain gauges.

2. A semiconductor strain gauge according to claim 1, wherein said semiconductor strain gauge pattern (5) is prepared by making use of a vapore phase epitaxy method and the like.

3. A semiconductor strain gauge according to claim 1, wherein said semiconductor strain gauge consists of one or a plurality of said semiconductor strain gauge patterns (5).

4. A semiconductor strain gauge according to claim 1, wherein said semiconductor strain gauge includes four semiconductor strain gauge patterns (5), two among which are prepared on the face of the chip (4) and have the same geometrical shape and the other two among which are prepared on the back of the chip (4) and have the same geometrical shape, said two patterns (5) prepared on the face of the chip (4) being symmetrically arranged with said two patterns (5) prepared on the back of the chip (4).

5. A semiconductor strain gauge according to claim 1 wherein said semiconductor strain gauge pattern (5) is a single straight line.

6. A semiconductor strain gauge according to claim 1, wherein said semiconductor strain gauge pattern (5) is formed by a plurality of straight line portions, said portions making a round trip as a whole.

7. A semiconductor strain gauge according to claim 1, wherein said semiconductor strain gauge pattern (5) is a semicircular shape or other arbitrary shapes.

8. A semiconductor strain gauge according to claim 1, wherein said semiconductor strain gauge pattern (5) is expanded in its ends for facilitating the mounting of lead wires.

9. A semiconductor strain gauge according to claim 1, wherein said chip (4) is extended in both ends thereof or increased in the thicknesses of both ends thereof.

# FIG. 1

# FIG. 2

# FIG. 3

# FIG. 4

# FIG. 5

# FIG. 6

FIG. 7

FIG. 8  FIG. 9 (a)

FIG. 9 (b)

FIG. 10

FIG. 11

# FIG.12

35 --- 33

36 --- 34

# FIG.13

33    34

35    36

# FIG.14

35 — 33

36 — 34

# FIG.15

CONSTRICTION  0  STRETCHING ^STRAIN

# FIG.16

39 --- 38

37 —

# FIG.17
(PRIOR ART)

30 —    31

32

## DOCUMENTS CONSIDERED TO BE RELEVANT

| Category | Citation of document with indication. where appropriate, of relevant passages | Relevant to claim | CLASSIFICATION OF THE APPLICATION (Int. Cl 4) |
|---|---|---|---|
| Y | GB-A-1 000 456 (TEXAS INSTRUMENTS INCORPORATED) <br> * Page 5, lines 56-60; page 4, lines 76-117; figures 5-7 * | 1-8 | G 01 L 1/18 |
| Y | US-A-4 522 072 (R.E.SULOUFF et al.) <br> * Abstract, last 4 lines; claim 6; figure 2 * | 2 | |
| Y | US-A-3 329 023 (A.D.KURTZ et al.) <br> * Column 6, lines 42-75; column 7, lines 1-55; figures 8-11 * | 1,3-8 | |
| Y | US-A-3 410 132 (R.N.HALL) <br> * Abstract; figure 1 * | 7 | **TECHNICAL FIELDS SEARCHED (Int. Cl 4)** |
| A | US-A-3 368 179 (J.F.ELLIOTT) <br> * Abstract; figure 2 * | 9 | G 01 L 1 |

The present search report has been drawn up for all claims

| Place of search | Date of completion of the search | Examiner |
|---|---|---|
| THE HAGUE | 15-07-1987 | VAN ASSCHE P.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on. or after the filing date
D : document cited in the application
L : document cited for other reasons

& : member of the same patent family, corresponding document

EPO Form 1503 03 82